# EUROPEAN PATENT APPLICATION

(11) **EP 3 171 538 A1**
(43) Date of publication of application: **24.05.2017**
(21) Application number: 15306833.3
(22) Date of filing: 18.11.2015
(51) Int. Cl.: H04L 5/14, H04W 28/18, H04W 72/00

(54) **FULL-DUPLEX COMMUNICATION IN A MOBILE COMMUNICATION NETWORK**

(71) Applicant: ALCATEL LUCENT, 92100 Boulogne-Billancourt (FR)
(72) Inventor: FRECASSETTI, Mario Giovanni Luigi, 20871 Vimercate (MB) (IT)
(74) Representative: Colombo, Stefano Paolo

(57) **Abstract**

It is disclosed a method for providing a point-to-point full duplex communication on a link comprising a first unidirectional connection adapted for transmission of data in a first frequency channel and a second unidirectional connection adapted for reception of data in a second frequency channel. The method comprises switching transmission of data over the first unidirectional connection from the first frequency channel to a third frequency channel different from the first frequency channel, wherein the third frequency channel is selected substantially independently of the second frequency channel. Also disclosed are corresponding apparatus and mobile communication system.

## Description

### Technical field

The present disclosure relates to the field of mobile communication networks. In particular, the present disclosure relates to a method and a system for providing a point-to-point full-duplex communication on a link between two nodes of a mobile communication network.

### Background art

As it is known, a mobile communication system allows a plurality of users provided with respective user terminals (e.g. mobile phones, smart phones, tablets, laptop PCs, etc.) spread over a wide geographical area to access telephone services and data services via wireless connection. Exemplary mobile communication systems are GSM (Global System for Mobile communications), UMTS (Universal Mobile Telecommunications System), LTE (Long Term Evolution), HSDPA (High-Speed Downlink Packet Access), etc.

Typically, a mobile communication system comprises a mobile communication network which in turn comprises a radio access network and a backhaul network. The radio access network comprises a number of radio access nodes or base transceiver stations (briefly, BTS) spread over a certain geographical area, each BTS being configured to exchange traffic with user terminals located within its own coverage area or cell. The backhaul network comprises a number of reciprocally interconnected nodes, which are connecting the base transceiver stations of the radio access network to a core network, such as, for instance, an Internet service provider network or a PSTN (Public Switched Telephone Network). The backhaul network of a mobile communication system is hence typically formed by point-to-point interconnections or links between nodes, with full-duplex transmission of mobile traffic data over the links.

Small cells are currently available for supporting the growth in mobile data traffic handled by a mobile communication system. The term "small cells" may encompass microcells, femtocells, picocells. As known, small cells are low-powered radio access nodes that may operate in both licensed and unlicensed frequency bands and may have a range from few meters to few kilometers. They may be used for incrementing the radio coverage of a macrocell of the mobile communication system, for instance inside buildings, to increase the capacity of the mobile communication network in given areas at risk of congestion (e.g. metropolitan areas), and also to offload mobile data traffic.

### Summary of the disclosure

Like any radio access node, also a small cell needs to be connected to a core network by a backhaul network. The inventor noticed that for backhauling small cells it may be foreseen a massive use of frequency bands currently unlicensed and for this reason uncoordinated. An example of a currently unlicensed frequency band is the 5 GHz U-NII (Unlicensed National Information Infrastructure) radio band or the 60 GHz radio band.

These frequency bands are in principle used without coordination, namely without any database reporting the present allocation of the frequency channels over the links of the backhaul network. It follows that in such a situation there is not any possibility to perform a network planning of the frequency resources, for avoiding interferences between channels over a same link and for making the channel availability predicable so that, in case of an external interference over a link using a given channel, the data transmission can be switched to another available channel which is free of interferer signals. The consequence is that the mobile communication system may experience delays and outages due to the unpredictable interferences between channels over the links of the backhaul network.

In view of the above, the inventor has faced the problem of providing a method and a system for providing a point-to-point full duplex communication on a link between two nodes of a mobile communication network which allows to mitigate the effects described above related to using unlicensed frequency bands for the backhauling of mobile data traffic. In particular, the inventor has faced the problem of providing a method and a system for providing a point-to-point full duplex communication on a link between two nodes of a mobile communication network which allows reducing the effects of external interferences.

In the following description and in the claims the expression "selecting a frequency channel for a unidirectional connection of a link substantially independently of another frequency channel used over the other unidirectional connection of the link" indicates an operation according to which the selection of a frequency channel to be used over a unidirectional connection of a full-duplex link is performed without considering the two frequency channels of the two unidirectional connections of the link as necessarily separated by a fixed frequency offset, like in a traditional frequency division duplexing (FDD) system. The use of the word "substantially" in the above expression is intended to indicate that when the operation of "selecting" is performed, a frequency gap (or spacing) between the two frequency channels should however be taken into consideration, but this gap is primarily conditioned by the feasibility aspects of the equipment used, which are related to the fact that the two frequency channels are used by a transmitter and a receiver belonging to a same transceiver equipment (possibly comprising a single antenna) and hence they should not interfere with each other.

According to a first aspect, the present disclosure provides a method for providing a point-to-point full duplex communication on a link comprising a first unidirectional connection adapted for transmission of data in a first frequency channel and a second unidirectional connection adapted for reception of data in a second frequency channel, the method comprising switching transmission of data over the first unidirectional connection from the first frequency channel to a third frequency channel different from the first frequency channel, wherein the third frequency channel is selected substantially independently of the second frequency channel.

Preferably, switching comprises, at a receiver of a node, checking whether the third frequency channel is available for data transmission and is compatible with a transmitter of the node.

Preferably, checking comprises checking whether the third frequency channel and the second frequency channel are separated by at least two channel spacings.

Preferably, the method further comprises, at the node, selecting the third frequency channel as the available and compatible channel which is closest to the first frequency channel.

Preferably, the method further comprises, at the node:
- sending a request to another node communicating with the node through the link to switch data communication to the third frequency channel;
- receiving data both on the first frequency channel and on the third frequency channel;
- switching reception of data to the third frequency channel.

Preferably, the request is sent over a radio system service channel.

According to an embodiment of the disclosure further comprises, at the receiver of the node, in case the third frequency channel is not compatible with the transmitter, sending from the transmitter to a receiver of another node communicating with the node through the link a request to switch data communication over the second unidirectional connection from the second frequency channel to a fourth frequency channel, the request containing an indication of said third frequency channel.

Preferably, the method further comprises, at the other node, selecting the fourth frequency channel among the available channels that are also compatible with a transmitter of the other node and with the third frequency channel.

Preferably, the method further comprises, at the other node, selecting the fourth frequency channel as the available and compatible channel which is closest to the second frequency channel.

Preferably, the method further comprises, at the other node:
- sending a request to the node to switch data communication to the fourth frequency channel;
- receiving data both on the second frequency channel and on the fourth frequency channel;
- switching reception of data to the fourth frequency channel.

Preferably, the method further comprises, at the other node:
- transmitting data both on the first frequency channel and on the third frequency channel; and
- stopping transmission of data over the first frequency channel.

According to a second aspect, the present disclosure provides an apparatus for providing a point-to-point full duplex communication in a mobile communication network, the apparatus comprising a first node configured to transmit data on a first unidirectional connection to a second node in a first frequency channel and receive data on a second unidirectional connection from the second node in a second frequency channel, the apparatus being configured to switch transmission of data over the first unidirectional connection from the first frequency channel to a third frequency channel different from the first frequency channel, wherein the third frequency channel is selected substantially independently of the second frequency channel.

Preferably, the first node is configured to:
- receive from the second node a request to switch data communication to the third frequency channel;
- upon reception of the request, transmit data both on the first frequency channel and on the third frequency channel; and
- stop transmission of data over the first frequency channel.

According to a third aspect, the present disclosure provides a mobile communication system comprising an apparatus as set forth above, further comprising the second node, the second node including a receiver configured to check whether the third frequency channel is available for data transmission and is compatible with a transmitter of the second node.

Preferably, the mobile communication system is any of a 3G mobile communication system or a 4G mobile communication system.

### Brief description of the drawings

The present disclosure will become clearer by reading the following detailed description, given by way of example and not of limitation, to be read by referring to the accompanying drawings, wherein:
- Figure 1 schematically shows an exemplary point-to-point link between two nodes of a communication network;
- Figure 2 is a flow chart illustrating the steps of the method according to the present disclosure;
- Figure 3 is a further flow chart illustrating the steps of the method according to the present disclosure;
- Figure 4 schematically shows exemplary channel occupancy diagrams for the nodes of Figure 1;
- Figure 5 schematically shows other channel occupancy diagrams for the two nodes of Figure 1;
- Figure 6 shows a block scheme of a receiver of a node; and
- Figure 7 shows a block scheme of a transmitter of a node.

### Detailed description of preferred embodiments of the disclosure

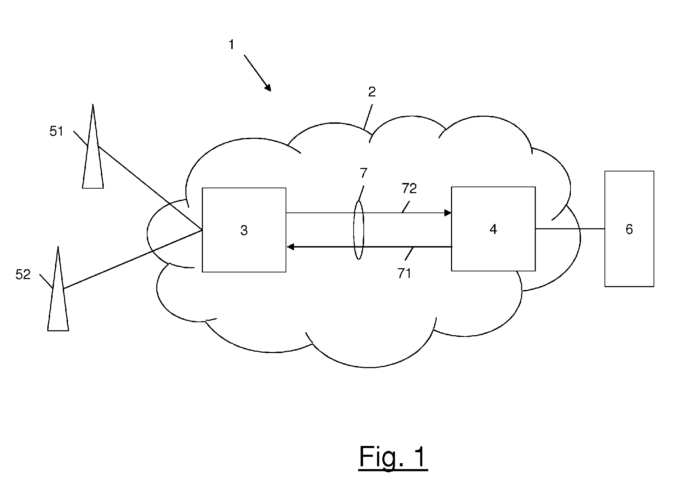

Figure 1 schematically shows a mobile communication system 1 according to an embodiment of the present disclosure. The mobile communication system 1 may be a 3G system such as UMTS or a 4G system, such as LTE or HSDPA system.

The mobile communication system 1 comprises a backhauling network 2. The backhauling network 2 is preferably a packet-switched network. The backhauling network 2 comprises a number of nodes reciprocally interconnected according to any known topology. In Figure 1, for simplicity, only a first node 3 and a second node 4 are shown, while the rest of the backhauling network 2 is schematically depicted as a cloud.

Each node of the backhauling network 2 may be locally connected to radio access nodes, such as base stations of a mobile communication operator. A radio access node may include any of: BTS, Node B, eNode B, Home Node B or HNB, Home eNode B or HeNB, smallcell, microcell, femtocell, picocell. By way of not limiting example, in the following description it is assumed that the first node 3 is locally connected to two radio access nodes 51, 52, by means of respective physical links.

The exemplary mobile communication system 1 of Figure 1 comprises a base station controller 6 (or radio network controller or RNC, using the terminology of UMTS and LTE) of the mobile communication operator. The base station controller 6 is connected to the backhauling network 2. In particular, the base station controller 6 is connected by means of a physical link to the second node 4 of the backhauling network 2.

Each node of the backhauling network 2 is connected to the other nodes of the backhauling network by means of wireless connections or wired connections (e.g. fiber optic connections or copper connections). In particular, the first node 3 and the second node 4 of the backhauling network 2 of Figure 1 are connected by means of a bidirectional link 7 comprising two unidirectional connections, namely a first unidirectional connection which will be referred to as downlink connection 71 and a second unidirectional connection which will be referred to as uplink connection 72. In the exemplary system of Figure 1, the downlink connection 71 transports data traffic from the second node 4 to the first node 3, while the uplink connection 72 transports data traffic from the first node 3 to the second node 4. The link 7 is preferably a full-duplex link. It is to be noticed that the terms "uplink" and "downlink" are used in the present description for identifying the unidirectional connections of the point-to-point link which connects the first node (which, in the exemplary network of Figure 1, is in turn connected to radio access nodes) and the second node (which, in the exemplary network of Figure 1, is in turn connected to a base station controller). This terminology is merely intended to simplify the description and is not limiting.

More in general, even if in this description reference is made, for sake of example, to a link between two nodes of a backhauling network, the present disclosure may be similarly applied to any point-to-point link connecting two nodes (each node being either fixed or mobile) of a mobile communication network.

Each node of the backhauling network 2 comprises a transmitter and a receiver. In particular, in the exemplary backhauling network 2 of Figure 1, the first node 3 comprises a transmitter TX3 and a receiver RX3, and similarly the second node 4 comprises a transmitter TX4 and a receiver RX4. The transmitters and receivers are not depicted in Figure 1. The downlink connection 71 connects the transmitter TX4 of the second node 4 and the receiver RX3 of the first node 3, while the uplink connection 72 connects the transmitter TX3 of the first node 3 and the receiver RX4 of the second node 4.

Preferably, the system 1 of the present disclosure operates on a given frequency band subdivided in frequency channels, or simply channels. For sake of example, the given frequency band may be the 60 GHz frequency band, which may be segmented, according to the ECC Recommendation (09)01: "Use of the 57 - 64 GHz frequency band for point-to-point fixed wireless systems" into 140 channels having a width of 50 MHz. It is assumed herein after that the frequency band of the system 1 is subdivided in 24 frequency channels CH1, ..., CH24. Each channel is associated with a center frequency, which is typically the frequency located at the center of the channel. Two adjacent channels (namely, the center frequencies of two adjacent channels) are separated by a so called "channel spacing" which is preferably fixed within the frequency band of the system 1.

Preferably, according to the present disclosure, the transmitter TX3, TX4 of each node 3, 4 and the receiver RX3, RX4 of the same node 3, 4 operate at different center frequencies (hence, they operate in different channels) within the frequency band of the mobile communication system 1. In particular, according to the present disclosure, in normal operating conditions, the transmitters TX3, TX4 and receivers RX3, RX4 may operate according to a frequency division duplexing (FDD) technique. The FDD technique is known and will not be further described herein after. The center frequency at which the transmitter TX3 of the first node 3 and the receiver RX4 of the second node 4 operate on the uplink connection 72 will be indicated in the following description and in the drawings as F34, while the center frequency at which the transmitter TX4 of the second node 4 and the receiver RX3 of the first node 3 operate on the downlink connection 71 will be indicated as F43.

Typically, according to the FDD technique, a frequency offset exists between the center frequency used at the transmitter of a node and the center frequency used at the receiver of the same node. This frequency offset is typically referred to as "duplex spacing".

While in systems exploiting the FDD technique the duplex spacing is typically fixed, according to the present disclosure the duplex spacing on the point-to-point link between two nodes of a mobile communication system may vary, as it will be described in greater detail herein after. For instance, according to the present disclosure, if one of the unidirectional connections of the point-to-point link is experiencing an interference, the center frequency employed over this unidirectional connection may change while the center frequency of the connection which is not experiencing the interference may remain unaltered.

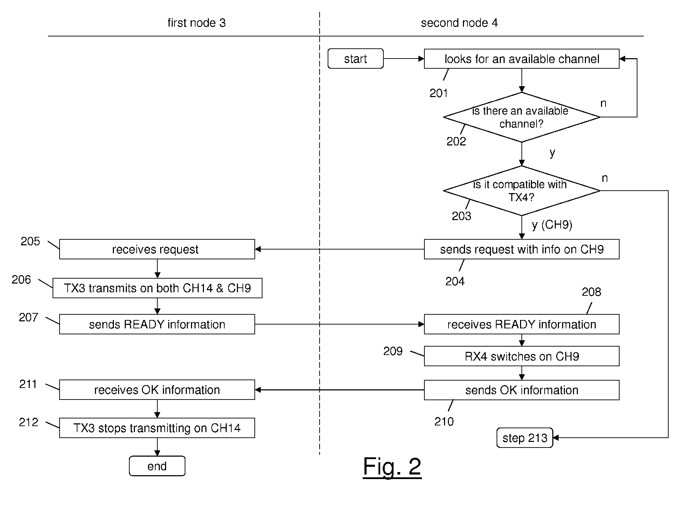

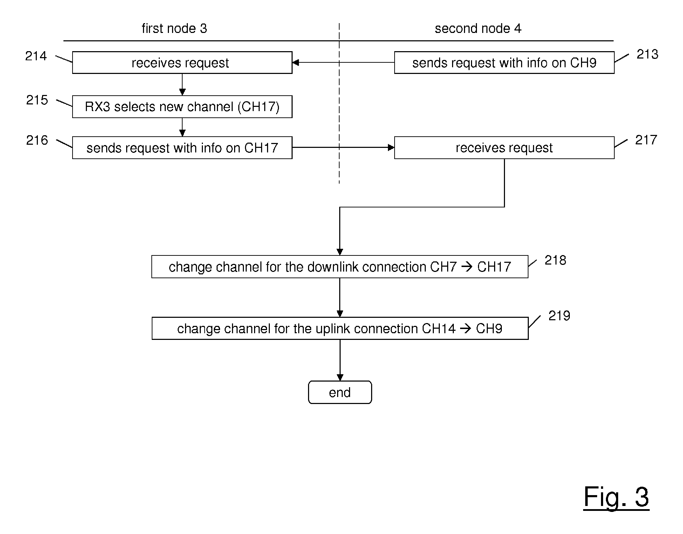

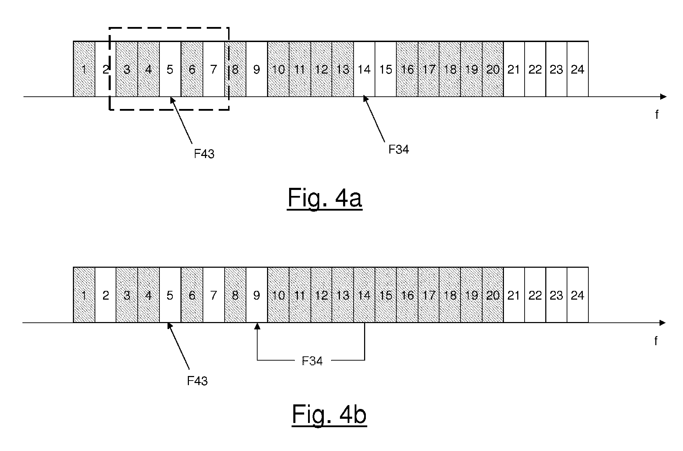

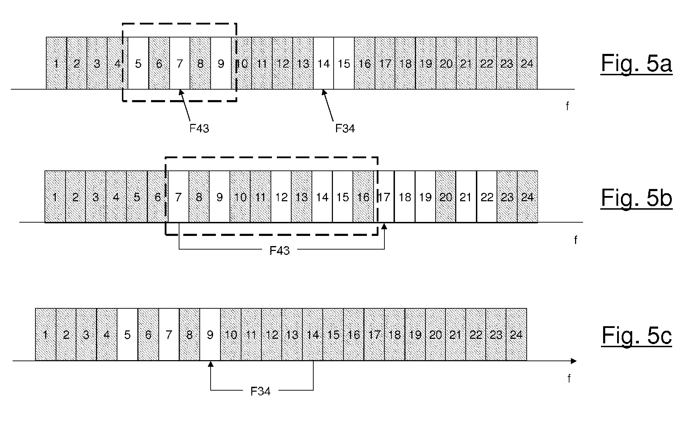

The method according to the present disclosure will now be described with reference to the flow charts of Figures 2 and 3 and the channel occupancy diagrams of Figures 4a, 4b, 5a-5c. The method will be illustrated herein after with reference to not limiting examples having the purpose of simplifying the description.

It is assumed that, during the normal operation of the first node 3 and the second node 4 in the mobile communication system 1, the center frequency F34 at which the transmitter TX3 of the first node 3 is transmitting belongs to the fourteenth channel CH14 of the frequency band of the mobile communication system 1. It is further assumed that during the normal operation of the first node 3 and the second node 4 in the mobile communication system 1, the center frequency F43 at which the transmitter TX4 of the second node 4 is transmitting belongs to the fifth channel CH5 of the frequency band of the mobile communication system 1. An exemplary diagram of channel occupancy is represented in Figure 4a for the uplink connection 72. In Figure 4a, as well as in the other Figures illustrating channel occupancy diagrams, channels are represented along the frequency axis. White boxes represent channels that are available for operation over the considered connection (namely, they are, as seen from the receiver RX4 of the second node 4, free from interferences and are not used for another communication). Striped boxes represent channel that are not available for operation over the considered connection, either because, for instance, they are not free from interferences, as seen from the receiver RX4 of the second node 4, or because they are used for another communication in proximity of the second node 4. The dashed box in Figure 4a comprises channels that are not compatible with the transmitter TX4 of the second node 4. According to the present disclosure, "compatible channels" over the two unidirectional connections of a link are channels whose center frequencies are separated by at least two or three channel spacings. This guarantees an appropriate isolation between the transmitter and the receiver that are co-located at a node (for instance, the receiver RX4 and the transmitter TX4 of the second node 4) and hence it guarantees the feasibility of the system. Referring back to Figure 4a, the channels inside the dashed box are channels that are not compatible with the transmitter TX4 of the second node 4 in that their center frequency is separated from the center frequency F43 of the channel CH5 used by the transmitter TX4 over the downlink connection 71 by a frequency gap narrower than two channel spacings. This is merely an example, as channels that are not compatible with the transmitter TX4 of the second node 4 may be separated from the center frequency F43 by a different frequency gap.

Now, it is assumed that an interferer signal impairs the transmission of data traffic over the uplink connection 72. This means that the spectrum of the interferer signal at least partially overlaps the spectrum of the signal transmitted over the uplink connection 72 within the fourteenth channel CH14 in proximity of the receiver RX4 of the second node 4. It is also assumed that the spectrum of the interferer signal overlaps the fifteenth channel CH15 as well. This situation is merely exemplary. The method of the present disclosure may be applied in the same way when an interference impairs transmission over the downlink connection between two nodes of the mobile communication system.

According to the method of the present disclosure, the second node 4, whose receiver RX4 is receiving data traffic over the uplink connection 72, preferably looks for an available channel in order to switch data communication (i.e., data transmission/reception) over the uplink connection 72 from the fourteenth channel CH14 to another channel which is free from interferences (step 201).

In case the second node 4 finds that there is not any available channel within the frequency band of the mobile communication system 1 (step 202), the second node 4 preferably repeats step 201 after a given amount of time. This given amount of time may be equal to, for instance, tens or hundreds of milliseconds. Step 201 may be repeated periodically by the second node 4 until an available channel is found.

In case the second node 4 finds that there is at least one available channel (step 202), the second node 4 preferably evaluates (step 203) whether the at least one available channel is compatible with the channel currently used by the transmitter TX4 over the downlink connection 71, namely, according to the example described above and depicted in Figure 4a, the fifth channel CH5. This means that the second node 4 preferably evaluates whether there is at least one available channel whose center frequency is separated from the center frequency F43 of the channel CH5 used over the downlink connection 71 by at least two channel spacings. As already stated above, this value is merely exemplary. If, at step 203, at least one compatible channel is found, the second node 4 preferably selects a target channel to which data transmission/reception over the uplink connection 72 may be switched. The target channel is selected among the available channels that are also compatible with the channel currently used by the transmitter TX4, and this selection is performed according to a predetermined criterion. The criterion may provide that the target channel is the channel whose center frequency is closest, among the center frequencies of the available and compatible channels, to the center frequency of the channel CH14 currently used for the uplink connection 72. Other criteria may be envisaged to select the target channel among the available and compatible channels, such as, for instance, a random selection.

According to the example depicted in Figures 4a and 4b, the second node 4 identifies the ninth channel CH9 as the target channel. In this case selection is made by considering that the ninth channel CH9 is the closest available channel to the current channel CH14 and the separation between the center frequency F43 used by the transmitter TX4 of the second node 4 over the downlink connection 71 and the center frequency of the ninth channel CH9 is larger than two channel spacings.

At step 204, the transmitter TX4 of the second node 4 preferably sends to the receiver RX3 of the first node 3 a request to change the channel on which data communication over the uplink connection 72 is currently taking place. The request also preferably indicates that data communication should be switched to the target channel CH9. The communication containing the request may be sent over a radio system service channel, such as the channel used for an alarm or the channel used for an Automatic Transmit Power Control (ATPC) signal.

At step 205, the receiver RX3 of the first node 3 preferably receives the request sent by the transmitter TX4 of the second node 4 and processes the information contained therein. In particular, the receiver RX3 of the first node 3 preferably identifies the target channel CH9 as the channel to witch data transmission/reception over the uplink connection 72 should be switched.

Then, at step 206, the transmitter TX3 of the first node 3 preferably starts transmitting data traffic over the uplink connection 72 both on the channel which is currently used, namely the fourteenth channel CH14, and on the target channel CH9.

At step 207, the transmitter TX3 of the first node 3 preferably sends to the receiver RX4 of the second node 4 an information indicating that it is ready to switch transmission to the target channel CH9. This information is indicated in the flow chart of Figure 2, as well as in the following lines of the description, as "READY information". The communication containing the READY information is preferably sent over a radio system service channel. At step 208, the receiver RX4 of the second node 4 preferably receives the READY information. Then, at step 209, the second node 4 preferably tunes the receiver RX4 on the target channel CH9. At this point, the transmitter TX4 of the second node 4 preferably sends to the receiver RX3 of the first node 3 an information indicating that the receiver RX4 of the second node 4 is ready to switch reception of data traffic to the target channel CH9 (step 210). This information is indicated in the flow chart of Figure 2, as well as in the following lines of the description, as "OK information". The communication containing the OK information is preferably sent over a radio system service channel.

At step 211, the receiver RX3 of the first node 3 preferably receives the OK information from the transmitter TX4 of the second node 4. Subsequently (step 212), the transmitter TX3 of the first node 3 stops transmitting data traffic on the channel which is experiencing an interference, namely the fourteenth channel CH14, and continues transmitting data traffic on the target channel CH9.

According to a simplified embodiment of the present disclosure, when the receiver RX3 of the first node 3 receives the request sent by the transmitter TX4 of the second node 4 and identifies the target channel CH9 as the channel to which data transmission/reception over the uplink connection 72 should be switched, the transmitter TX3 of the first node 3 starts transmitting data traffic over the uplink connection 72 on the target channel CH9 only. In the meanwhile, the second node 4 preferably tunes the receiver RX4 on the target channel CH9 and starts receiving data traffic over the uplink connection 72 on the target channel CH9 only. If communication can not be restored on the target channel CH9 after a given interval of time, for instance 1 second, both the transmitter TX3 of the first node 3 and the receiver RX4 of the second node 4 tune back on the channel they used before, namely, according to this example, the fourteenth channel CH14, even if it is experiencing an interference.

It is to be noticed that the method according to the present disclosure as illustrated through steps 201-212 allows completely avoiding any out of service condition.

According to the present disclosure, when a unidirectional connection of a point-to-point full duplex link is affected by an interference, the channel over which the communication is taking place may be changed so that the effects of the interference may be minimized. Moreover, only the channel currently used over the unidirectional connection experiencing the interference needs to be changed while the channel of the other connection may remain unaltered. This results from the fact that the present disclosure allows providing an FDD system with a certain flexibility. Indeed, according to the method of the present disclosure, over the considered link, the duplex spacing is no more fixed but may vary. It follows that the system of the present disclosure is more efficient as compared with "traditional" FDD systems because while in a traditional system, in case of interference affecting the point-to-point link, it is necessary to find two channels free of interferences (for the two unidirectional connections of the link), the two channels being at a fixed frequency distance, in the system of the present disclosure it is required to find a single available channel.

The system of the present disclosure is also advantageous over a traditional time division duplexing (TDD) system possibly implementing a known dynamic frequency selection (DFS) technique. Indeed, the mechanism of the present disclosure is simpler and requires to find a smaller available frequency channel in case of interference, with respect to a traditional TDD system. According to the present disclosure, an available channel is to be found only for a single connection of the bidirectional link. In a TDD system, the two connections of the bidirectional link share the same frequency channel, and hence a single available channel is to be found in case of interference. However, in a TDD system, the frequency channel shared by the two connections is larger than a frequency channel of a FDD system. As the probability to find an interference free channel decreases with the channel size (while the probability of interference is directly proportional to the channel size), it is apparent that the present disclosure is particularly advantageous also over a TDD system. As a consequence, the time needed to recover from interference is faster and the outage is minimized.

Moreover, in a traditional TDD system, in case of interference, it is required to find a channel which is seen as available from both sides of the link where the two receivers are located. On the contrary, according to the present disclosure, it suffices that the channel to which communication is switched is seen as available from only one receiver located at one side of the link.

Figures 5a-5c refer to another example of application of the method of the present disclosure. In this case, the steps of the method are illustrated in the flow chart of Figure 2 and in the flow chart of Figure 3.

It is assumed that, during the normal operation of the first node 3 and the second node 4 in the mobile communication system 1, the center frequency F34 at which the transmitter TX3 of the first node 3 is transmitting belongs to the fourteenth channel CH14 of the frequency band of the mobile communication system 1. It is further assumed that during the normal operation of the first node 3 and the second node 4 in the system 1, the center frequency F43 at which the transmitter TX4 of the second node 4 is transmitting belongs to the seventh channel CH7 of the frequency band of the mobile communication system 1. An exemplary diagram of channel occupancy is represented in Figure 5a for the uplink connection 72. As already described above, white boxes represent channels that are available for operation over the considered connection (namely, they are, as seen from the receiver RX4 of the second node 4, free from interferences). Striped boxes represent channel that are not available for operation over the considered connection, either because, for instance, they are not free from interferences, as seen from the receiver RX4 of the second node 4, or because they are used for another communication in proximity of the second node 4. The dashed box in Figure 5a comprises channels that are not compatible with the transmitter TX4 of the second node 4, namely channels whose center frequency is separated from the carrier frequency F43 of the channel CH7 used over the downlink connection 71 by a frequency gap narrower than, for instance, two channel spacings.

Now, it is assumed that an interferer signal impairs the transmission of data traffic over the uplink connection 72. In particular, it is assumed that the spectrum of the interferer signal overlaps the fourteenth channel CH14. It is also assumed that the spectrum of the interferer signal overlaps the fifteenth channel CH15 as well.

At steps 201 and 202, the second node 4 finds that, for instance, the ninth channel CH9 is available but, at step 203, the second node 4 determines that this channel is not compatible with the channel currently used by the transmitter TX4 over the downlink connection 71, namely the seventh channel CH7.

In a case according to which none of the channels available for switching thereto data transmission/reception of one unidirectional connection of the point-to-point link is compatible with the transmitter of the other unidirectional connection, the present disclosure provides for changing the channel on which that transmitter is currently transmitting, namely the channel currently used over the other unidirectional connection, so that the at least one of the available channels becomes compatible.

Turning now to the flow chart of Figure 3, in case the second node 4 does not find any compatible channel among the available channels, the transmitter TX4 of the second node 4 preferably sends to the receiver RX3 of the first node 3 a request to change the channel on which data communication over the downlink connection 71 is currently taking place (step 213). The request also preferably indicates that the ninth channel CH9 is available for changing the channel on which data communication over the uplink connection 72 is currently taking place. The communication containing the request is preferably sent over a radio system service channel.

At step 214, the receiver RX3 of the first node 3 preferably receives the request from the transmitter TX4 of the second node 4. Then, the first node 3, at step 215, preferably determines whether there is at least one available channel for the downlink connection 71, which is compatible with the transmitter TX3 of the first node 3 with respect to both the channel that is currently used by the transmitter TX3, namely the fourteenth channel CH14, and the channel that is indicated within the request, namely the ninth channel CH9.

Figure 5b depicts the exemplary channel occupancy for the downlink connection 71. The dashed box comprises channels that are not compatible with the transmitter TX3 of the first node 3 with respect to both the fourteenth channel CH14 and the ninth channel CH9.

If at step 215 at least one compatible channel is found, the first node 3 preferably selects a target channel, among the available channels that are also compatible with the channel currently used by the transmitter TX3 and with the channel specified in the request received from the second node 4, according to a predetermined criterion. The criterion may provide that the target channel is the channel whose center frequency is closest to the carrier frequency of the channel CH7 currently used for the downlink connection 71 among the center frequencies of the available and compatible channels. Other criteria may be envisaged to select the target channel among the available and compatible channels, such as, for instance, a random selection.

According to the example depicted in Figure 5b, the first node 3 identifies the seventeenth channel CH17 as the target channel and selection is made on the basis of the fact that the seventeenth channel CH17 is the available and compatible channel which is closest to the seventh channel CH7.

At step 216, the transmitter TX3 of the first node 3 preferably sends to the receiver RX4 of the second node 4 a request to change the channel on which data communication over the downlink connection 71 is currently taking place. The request also preferably indicates that the seventeenth channel CH17 is available for changing the channel on which data communication over the downlink connection 71 is currently taking place. The communication containing the request is preferably sent over a radio system service channel.

At step 217, the receiver RX4 of the second node 4 preferably receives the request from the transmitter TX3 of the first node 3.

Then, a procedure similar to the one described above with reference to steps 206-212 is set up between the first node 3 and the second node 4 for changing the channel on which data is transmitted/received over the downlink connection 71. This procedure is indicated as step 218 in the flowchart of Figure 3. In particular, according to this procedure:
- the second node 4 starts transmitting on both the seventh channel CH7 and the seventeenth channel CH17;
- the first node 3 switches reception to the seventeenth channel CH17; and
- the second node 4 stops transmitting data on the seventh channel CH7.

At the end of step 218, the center frequency F43 used for transmission/reception over the downlink connection 71 is the center frequency of the seventeenth channel CH17, as also depicted in Figure 5b.

Afterwards, a procedure similar to the one described above with reference to steps 206-212 is set up between the first node 3 and the second node 4 for changing the channel on which data is transmitted/received over the uplink connection 72. This procedure is indicated as step 219 in the flowchart of Figure 3. In particular, according to this procedure:
- the first node 3 starts transmitting on both the fourteenth channel CH14 and the ninth channel CH9;
- the second node 4 switches reception to the ninth channel CH9; and
- the first node 3 stops transmitting data on the fourteenth channel CH14.

At the end of step 219, the center frequency F34 used for transmission/reception over the uplink connection 72 is the center frequency of the ninth channel CH9, as also depicted in Figure 5c.

Also in this case, the present disclosure provides for minimizing the effect of an interferer signal over one connection of a point-to-point link.

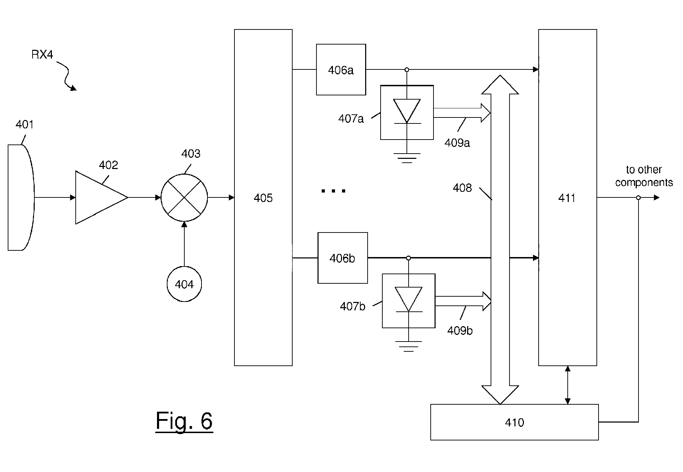

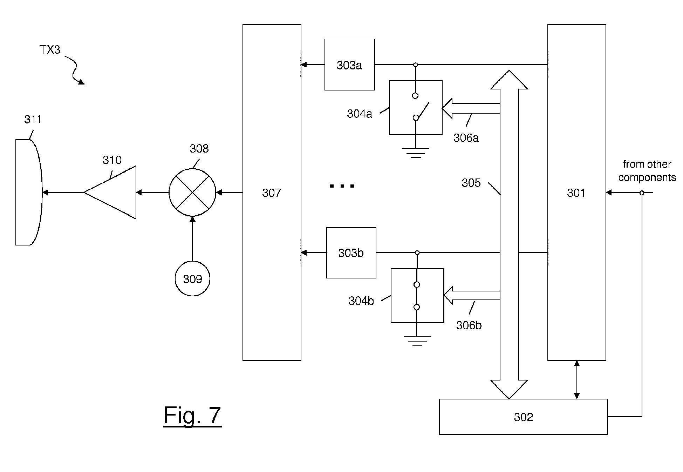

Figure 6 and Figure 7 show block schemes of, respectively, a receiver and a transmitter for a node of the mobile communication network configured to implement the method according to the present disclosure.

Figure 6 shows a block scheme of a receiver, for instance the receiver RX4 of the second node 4. The receiver RX3 of the first node 3 has a similar structure. The receiver RX4 preferably comprises an antenna 401 connected in cascade to an amplifier 402 (preferably, a low noise amplifier) and a down converter 403, which is in turn connected to a local oscillator 404. The down converter 403 is configured to convert the signal received by the antenna 401 (over the uplink connection 72, according to the example of Figure 1), and amplified by the low noise amplifier 402, to an intermediate frequency.

The output of the down converter 403 is connected to an input port of a signal distributor block 405. The signal distributor block 405 is configured to receive the signal at its input port and send the signal to a number of output ports.

Each output port of the signal distributor block 405 is connected to a channel filter 406a, 406b. In Figure 6, only two channel filters 406a, 406b are shown for sake of example. The filters 406a, 406b are preferably tuned to the center frequencies of the frequency channels of the system 1 that are down converted around the intermediate frequency. For example, the filter 406a shown in Figure 6 may be tuned to the center frequency of the ninth channel CH9, and the filter 406b to the center frequency of the fourteenth channel CH14. Each filter 406a, 406b is preferably connected to a discovery block 407a, 407b (represented as a diode in Figure 6) which is configured to detect a signal at the output of the respective filter 406a, 406b (namely, each block 407a, 407b is configured to detect whether the corresponding frequency channel is currently used for communication or not, or whether it is affected by an interference and hence can not be used). Each block 407a, 407b is preferably configured to generate and send a channel status information to a bus 408 by means of a dedicated connection 409a, 409b. The channel status information of a given channel preferably indicates whether the channel is currently used for communication or not, or whether it is affected by an interference and hence it can not be used.

The bus 408 preferably connects each block 407a, 407b to a receiver logic unit 410. The receiver logic unit 410 is hence configured to receive the channel status information from each block 407a, 407b related to the corresponding channel. Each filter 406a, 406b is preferably connected to an input port of a signal matrix block 411, which is also connected to the receiver logic unit 410. The signal matrix block 411 is preferably configured to receive signals of the different frequency channels as filtered by the channel filters 406a, 406b and to select a wanted signal (namely, the signal in the channel allocated for transmission over the considered connection; according to the example of Figure 4a, in normal conditions, it is the signal in the fourteenth channel CH14, over the uplink connection 72).

The receiver logic unit 410 is preferably configured to process the channel status information received from the blocks 407a, 407b in order to detect the channels that are free from communication or interference (represented by the white boxes in Figure 4a, for example) and may be considered as available at step 202 of the flowchart of Figure 2. Moreover, the receiver logic unit 410 is configured to detect whether the wanted signal is free from interferences by analyzing, for instance, a mean square error (MSE). In case the wanted signal is free from interference, a corresponding information may be sent by the receiver logic unit 410 to the signal matrix block 411, which then selects this signal at the output of the receiver RX4. In case the wanted signal is not free from interference, the receiver logic unit 410 preferably triggers the implementation of the method according to the flowchart of Figure 2 by performing step 201.

Figure 7 shows a block scheme of a transmitter for a node of the mobile communication network, for instance the transmitter TX3 of the first node 3. The transmitter TX4 of the second node 4 has a similar structure. The transmitter TX3 preferably comprises a signal distributor block 301 which is configured to receive an input signal (the "wanted signal") at an input port (from other components of the node which are not shown in Figure 7 as they are not relevant to the present description) and to send the input signal to a number of output ports. The input signal is the signal to be transmitted in a frequency channel allocated for transmission over the considered connection. The signal distributor block 301 is preferably connected to a transmitter logic unit 302, which is configured to select one or more frequency channels for the transmission of the wanted signal over the considered connection (namely, the uplink connection 72 according to the example here considered). According to the example of Figure 4a, in normal conditions, the transmitter logic unit 302 selects the fourteenth channel CH14 for transmission of the wanted signal over the uplink connection 72.

Moreover, the transmitter logic unit 302 is configured to generate channel status information for each frequency channel of the system 1, each channel status information indicating whether the respective channel is to be used for transmission or not.

Each output port of the signal distributor block 301 is connected to a respective channel filter 303a, 303b tuned to a respective center frequency of one frequency channel of the system 1, which is, at this stage, converted around the intermediate frequency. In Figure 7, only two channel filters 303a, 303b are shown, for sake of example. Each channel filter 303a, 303b is connected also to a respective switch 304a, 304b which is configured to be driven by a command signal comprising the channel status information of the respective frequency channel. This signal comes from the transmitter logic unit 302 through a bus 305 and dedicated connections 306a, 306b.

The filters 303a, 303b are connected to an adder 307 which is configured to sum the filtered signals. The signal at the output of the adder 307 is then forwarded to an up converter 308 connected to a local oscillator 309. The up converter 308 is configured to convert the signal from the intermediate frequency to the frequency used for transmission by the transmitter TX3 over the link 7 (namely, the center frequency of the channel which is allocated for transmission; in the example considered above, it is the center frequency of the fourteenth channel CH14 in normal conditions). The up converter 308 is connected in cascade to an amplifier 31, which is configured to amplify the signal, and to an antenna 311.

A person skilled in the art would appreciate that the functions of the various elements shown in the Figures 1, 6 and 7, including any functional blocks labeled as "device", "unit", "block", "module" or "processing unit", may be provided through the use of dedicated hardware, as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A method for providing a point-to-point full duplex communication on a link (7) comprising a first unidirectional connection (72) adapted for transmission of data in a first frequency channel and a second unidirectional connection (71) adapted for reception of data in a second frequency channel, the method comprising switching transmission of data over the first unidirectional connection (72) from the first frequency channel to a third frequency channel different from said first frequency channel, wherein said third frequency channel is selected substantially independently of said second frequency channel.

2. The method according to claim 1, wherein said switching comprises, at a receiver (RX4) of a node (4), checking whether said third frequency channel is available for data transmission and is compatible with a transmitter (TX4) of said node (4).

3. The method according to claim 2, wherein said checking comprises checking whether said third frequency channel and said second frequency channel are separated by at least two channel spacings.

4. The method according to claim 2 or 3, wherein said method further comprises, at said node (4), selecting said third frequency channel as the available and compatible channel which is closest to said first frequency channel.

5. The method according to any of claims 2 to 4, wherein it further comprises, at said node (4):
- sending a request to another node (3) communicating with the said node (4) through said link (7) to switch data communication to said third frequency channel;
- receiving data both on said first frequency channel and on said third frequency channel;
- switching reception of data to said third frequency channel.

6. The method according to claim 5, wherein said request is sent over a radio system service channel.

7. The method according to claim 2, wherein it further comprises, at said receiver (RX4) of said node (4), in case said third frequency channel is not compatible with said transmitter (TX4), sending from said transmitter (TX4) to a receiver (RX3) of another node (3) communicating with the said node (4) through said link (7) a request to switch data communication over the second unidirectional connection (71) from the second frequency channel to a fourth frequency channel, said request containing an indication of said third frequency channel.

8. The method according to claim 7, wherein it further comprises, at said other node (3), selecting said fourth frequency channel among the available channels that are also compatible with a transmitter (TX3) of said other node (3) and with said third frequency channel.

9. The method according to claim 8, wherein said method further comprises, at said other node (3), selecting said fourth frequency channel as the available and compatible channel which is closest to said second frequency channel.

10. The method according to claim 8 or 9, wherein it further comprises, at said other node (3):
- sending a request to said node (4) to switch data communication to said fourth frequency channel;
- receiving data both on said second frequency channel and on said fourth frequency channel;
- switching reception of data to said fourth frequency channel.

11. The method according to claim 10, wherein it further comprises, at said other node (3):
- transmitting data both on said first frequency channel and on said third frequency channel; and
- stopping transmission of data over said first frequency channel.

12. An apparatus for providing a point-to-point full duplex communication in a mobile communication network, said apparatus comprising a first node (3) configured to transmit data on a first unidirectional connection (72) to a second node (4) in a first frequency channel and receive data on a second unidirectional connection (71) from the second node (4) in a second frequency channel, said apparatus (1) being configured to switch transmission of data over the first unidirectional connection (72) from the first frequency channel to a third frequency channel different from said first frequency channel, wherein said third frequency channel is selected substantially independently of said second frequency channel.

13. The apparatus according to claim 12, wherein said first node (3) is configured to:
- receive from the second node (4) a request to switch data communication to said third frequency channel;
- upon reception of said request, transmit data both on said first frequency channel and on said third frequency channel; and
- stop transmission of data over said first frequency channel.

14. A mobile communication system (1) comprising an apparatus according to any of claims 12 or 13, further comprising said second node (4), said second node (4) including a receiver (RX4) configured to check whether said third frequency channel is available for data transmission and is compatible with a transmitter (TX4) of said second node (4).

15. The mobile communication system (1) of claim 14, said system being any of a 3G mobile communication system or a 4G mobile communication system.

## Amended claims

### Amended claims in accordance with Rule 137(2) EPC.

1. A method for providing a point-to-point full duplex communication on a link (7) comprising a first unidirectional connection (72) adapted for transmission of data in a first frequency channel from a first node (3) to a second node (4) and a second unidirectional connection (71) adapted for reception of data in a second frequency channel at the first node (3) from said second node (4), the method comprising switching transmission of data over the first unidirectional connection (72) from the first frequency channel to a third frequency channel different from said first frequency channel, wherein said third frequency channel is selected substantially independently of said second frequency channel, wherein said switching is performed in response to checking, by a receiver (RX4) of the second node (4), that said third frequency channel is available for data transmission and is compatible with a transmitter (TX4) of said second node (4).

2. The method according to claim 1, wherein said checking comprises checking whether said third frequency channel and said second frequency channel are separated by at least two channel spacings.

3. The method according to claim 1 or 2, wherein said method further comprises, at said second node (4), selecting said third frequency channel as the available and compatible channel which is closest to said first frequency channel.

4. The method according to any of claims 1 to 3, wherein it further comprises, at said node (4):
- sending a request to another node (3) communicating with the said node (4) through said link (7) to switch data communication to said third frequency channel;
- receiving data both on said first frequency channel and on said third frequency channel;
- switching reception of data to said third frequency channel.

5. The method according to claim 4, wherein said request is sent over a radio system service channel.

6. The method according to claim 1, wherein it further comprises, at said receiver (RX4) of said second node (4), in case said third frequency channel is not compatible with said transmitter (TX4), sending from said transmitter (TX4) to a receiver (RX3) of said first node (3) a request to switch data communication over the second unidirectional connection (71) from the second frequency channel to a fourth frequency channel, said request containing an indication of said third frequency channel.

7. The method according to claim 6, wherein it further comprises, at said first node (3), selecting said fourth frequency channel among the available channels that are also compatible with a transmitter (TX3) of said first node (3) and with said third frequency channel.

8. The method according to claim 7, wherein said method further comprises, at said first node (3), selecting said fourth frequency channel as the available and compatible channel which is closest to said second frequency channel.

9. The method according to claim 7 or 8, wherein it further comprises, at said first node (3):
- sending a request to said second node (4) to switch data communication to said fourth frequency channel;
- receiving data both on said second frequency channel and on said fourth frequency channel;
- switching reception of data to said fourth frequency channel.

10. The method according to claim 9, wherein it further comprises, at said first node (3):
- transmitting data both on said first frequency channel and on said third frequency channel; and
- stopping transmission of data over said first frequency channel.

11. An apparatus for providing a point-to-point full duplex communication in a mobile communication network, said apparatus comprising a first node (3) configured to transmit data on a first unidirectional connection (72) to a second node (4) in a first frequency channel and receive data on a second unidirectional connection (71) from the second node (4) in a second frequency channel, said apparatus (1) being configured to switch transmission of data over the first unidirectional connection (72) from the first frequency channel to a third frequency channel different from said first frequency channel, wherein said third frequency channel is selected substantially independently of said second frequency channel, wherein said apparatus (1) is configured to perform said switching in response to checking, by a receiver (RX4) of the second node (4), that said third frequency channel is available for data transmission and is compatible with a transmitter (TX4) of said second node (4).

12. The apparatus according to claim 11, wherein said first node (3) is configured to:
- receive from the second node (4) a request to switch data communication to said third frequency channel;
- upon reception of said request, transmit data both on said first frequency channel and on said third frequency channel; and
- stop transmission of data over said first frequency channel.

13. A mobile communication system (1) comprising an apparatus according to any of claims 11 or 12, further comprising said second node (4), said second node (4) including a receiver (RX4) configured to check whether said third frequency channel is available for data transmission and is compatible with a transmitter (TX4) of said second node (4).

14. The mobile communication system (1) of claim 13, said system being any of a 3G mobile communication system or a 4G mobile communication system.
